# EUROPÄISCHE PATENTSCHRIFT

(11) **EP 1 419 876 B1**
(45) Veröffentlichungstag und Bekanntmachung des Hinweises auf die Patenterteilung: **16.04.2008**
(21) Anmeldenummer: 03025288.6
(22) Anmeldetag: 06.11.2003
(51) Int. Cl.: B29C 73/16, B60C 17/02, B60S 5/04

(54) **Verfahren und Vorrichtung zum Abdichten und Aufpumpen von Reifen bei Pannen sowie Adapter hierfür**
Method and device for sealing and inflating tyres in case of breakdown and adapter therefor
Méthode et dispositif pour rendre étanche et regonfler des pneus en cas de panne et aptateur associé

(30) Priorität: 16.11.2002 DE 10253445
(43) Veröffentlichungstag der Anmeldung: 19.05.2004
(73) Patentinhaber: ADAM OPEL AG, 65423 Rüsselsheim (DE)
(72) Erfinder: Brünjes, Arend, 64569 Nauheim (DE); Zerjeski, Frank, 55299 Nackenheim (DE)

(56) Entgegenhaltungen:
- WO-A-00/21875
- DE-A1- 3 803 012
- DE-A1- 10 015 166
- DE-A1- 19 652 546
- US-A- 5 480 487
- US-A- 6 019 145

## Beschreibung

Die Erfindung betrifft ein Verfahren zum Einbringen von Abdichtmittel in einen Reifen im Falle einer Panne gemäß dem Oberbegriff des Anspruchs 1. Ferner betrifft die Erfindung eine entsprechende Vorrichtung gemäß dem Oberbegriff des Anspruchs 5 sowie einen Adapter hierfür gemäß Anspruch 9.

In der Praxis sind Reifenreparatursets, häufig auch Tire-Repair-Kits genannt, zum Reparieren eines Fahrzeugreifens im Falle einer Panne durch den Fahrer oder die Fahrgäste des Fahrzeugs vor Ort bekannt.

Diese Tire-Repair-Kits bestehen aus einem Kompressor, einer Dichtmittelflasche und einem Schlauchpaket, mittels dessen die Luft vom Kompressor in den Reifen befördert wird, so dass dieser wieder aufgepumpt werden kann.

Die bekannten Tire-Repair-Kits weisen folgende Vorteile auf: Gewichtsreduzierung durch Wegfall des Reserverads, Stauraumgewinn aufgrund geringeren Platzbedarfs für das Tire-Repair-Kit verglichen mit dem Platzbedarf für ein Reserverad, Komfortgewinn für den Kunden im Falle einer Panne, da der Reifenwechsel entfällt, einfache Handhabung und zusätzliche Optionen wie Nutzen des Kompressors zum Aufpumpen von Freizeitgeräten (Luftmatratze, Fahrrad, Schlauchboot, usw.).

Zum Einbringen des Abdichtmittels in den defekten Reifen wird bei einigen dieser Reparatursystemen die Dichtmittelflasche vor dem Aufpumpen an das Reifenventil angesetzt und von Hand derart gedrückt, dass das in der Flasche enthaltene Abdichtmittel durch das Reifenventil hindurch in den Reifeninnenraum gepresst wird. Der Reifen mit dem darin befindlichen Abdichtmittel ist anschließend in einem zweiten Schritt wieder aufzupumpen.

Bei den manuell zu entleerenden Dichtmittelflaschen handelt es sich i. d. R. um günstig herstellbare Kunststoffflaschen, die meist aus PE bestehen und bei Gebrauch keine besondere Beanspruchung erfahren. Von Nachteil ist an diesem System jedoch, dass das Einfüllen des Abdichtmittels unmittelbar am Reifen zu erfolgen hat. Die das Einfüllen durchführende Person muss sich somit ungeachtet der Witterung, der Tageszeit oder der Verkehrssituation für die Dauer des Einfüllens neben dem Fahrzeug im Freien aufhalten, was nicht nur unangenehm, sondern bei stark befahrenen Straßen auch gefährlich ist. Zudem verlangt dieses manuelle Reparatursystem anders als die automatisierten Systeme kein Mitführen eines Kompressors zum anschließenden Aufpumpen des Reifens. Somit besteht die Möglichkeit, dass der Fahrer im Notfall keinen Kompressor im Fahrzeug mitführt und mit dem platten Reifen wenigstens bis zur nächsten Tankstelle oder dgl. weiterfahren muss. Die damit einhergehende weitere Schädigung des Reifens kann dann eine einfache Reparatur mit dem Abdichtmittel unmöglich machen.

Bei anderen, automatisierten Füllsystemen wird die Dichtmittelflasche zwischen den mitgeführten Kompressor und den Reifen geschaltet, wie dies bspw. in der DE 195 45 935 oder der DE 196 52 546 diskutiert ist. Bei diesen Systemen presst die vom Kompressor kommende Luft das Abdichtmittel mit Überdruck aus der Flasche heraus und im weiteren Verlauf in den Reifen hinein. Die Flaschen, die bei den automatisierten, wesentlich bedienungsfreundlicheren Systemen zum Einsatz kommen, erfahren eine Druckluftbeaufschlagung zum Austreiben des Dichtmittels, die in einer Größenordnung von bis zu 10 bar liegt. Dies ist aber insofern nachteilig, als an diese Flaschen höhere Ansprüche hinsichtlich ihrer Belastbarkeit gestellt werden müssen, als an die Flaschen der manuellen Systeme. So muss ein sichergestellter Berstdruck bei rund 13 bar liegen. Die druckbeaufschlagten Flaschen werden daher bspw. aus PP hergestellt und sind wesentlich teurer in der Produktion. Diese vergleichsweise hohen Kosten sind aber insbesondere deshalb unerfreulich, da es sich bei diesen Dichtmittelflaschen zukünftig um Massenartikel handeln könnte, mit denen möglicherweise die Mehrzahl der in Zukunft zugelassenen Kraftfahrzeuge ausgestattet sein könnten.

Zudem sind bei den mit Überdruck beaufschlagten Dichtmittelflaschen Ventile erforderlich, die ein Austreiben des Dichtmittels erst ab einem bestimmten Überdruck im Behälterinneren zulassen. Derlei Ventile können ihre Funktionstüchtigkeit jedoch bei längerer Lagerung der Dichtmittelflasche einbüßen. Ferner sind solche Ventile teuer und erhöhen die Kosten der Dichtmittelflasche zusätzlich. Nicht zuletzt stellen diese Ventile zusätzliche Bauteile dar, die nicht nur störanfällig sein können, sondern weiteren Bauraum benötigen.

Weitere Verfahren, bei denen die Druckmittelflasche unmittelbar mit Überdruck beaufschlagt werden, um das Abdichtmittel aus der Druckmittelflasche zu treiben sind aus den Druckschriften DE 10015166 A1 und WO 00/21875 A bekannt. Bezüglich der Nachteile sei auf die vorangehende Beschreibung des Standes der Technik verwiesen.

Vor diesem Hintergrund des Standes der Technik sowie seiner Nachteile ist es Aufgabe der vorliegenden Erfindung, ein Verfahren zum automatisierten Einbringen des Abdichtmittels mit Hilfe einer Druckquelle bzw. eines Kompressors in den Reifen vorzuschlagen, bei dem die Anforderungen an die Dichtmittelflasche hinsichtlich Druckbeständigkeit wesentlich geringer sind als bei den druckbeaufschlagten Dichtmittelflaschen des Standes der Technik, und in dessen Rahmen auch herkömmliche, zum manuellen Einbringen des Abdichtmittels in den Reifen vorgesehene Flaschen, verwendet werden können.

Eine weitere Aufgabe ist es, eine Vorrichtung vorzuschlagen, mittels derer das erfindungsgemäße Verfahren vorrichtungstechnisch umgesetzt werden kann, und bei der insbesondere auf störanfällige Ventile verzichtet werden kann.

Ferner ist es Aufgabe der vorliegenden Erfindung, einen hierfür geeigneten Adapter vorzuschlagen.

Diese Aufgaben werden jeweils durch die Merkmale des Anspruchs 1, die Merkmale des Anspruchs 5 sowie durch die Merkmale des Anspruchs 9 gelöst.

Die vorliegende Erfindung schlägt hierfür erstmals ein Verfahren zum Abdichten und Aufpumpen von Reifen im Falle einer Panne vor, bei dem ein von einer Druckquelle bzw. einem Kompressor kommendes Gas auf seinem Weg zum Reifen durch einen Schlauch geführt an einer Venturi-Düse vorbeiströmt. Durch das Vorbeiströmen dieses Gases an der Venturi-Düse, verringert sich der Druck an der Auslassöffnung des Dichtmittelbehälters, wodurch das Abdichtmittel aus der Dichtmittelflasche bzw. dem -behälter entnommen bzw. gesaugt wird und dem unter Druck stehenden Gas zugemischt wird. Das somit entstandene Gemisch von Gas bzw. Luft und Abdichtmittel wird dem Reifen mittels eines vom Dichtmittelbehälter zum Reifen führenden Schlauchs zugeführt. Auf diese Weise gelangt das Abdichtmittel zusammen mit der im Schlauch herrschenden Gas- bzw. Luftströmung in den Reifen, bis der Dichtmittelbehälter leer ist. Die Menge des aus dem Dichtmittelbehälter austretenden Abdichtmittels kann durch die Größe der Venturi-Düse, den Schlauchdurchmesser, den Kompressordruck, den Inhalt des Dichtmittelbehälters, die Strömungsgeschwindigkeit und weitere, beeinflussbare Parameter wunschgemäß eingestellt werden.

Dieses erstmals vorgeschlagene Verfahren bietet gegenüber den herkömmlichen Verfahren, bei denen Gas vom Kompressor unter Druck in die Dichtmittelflasche zum Entnehmen des dort aufbewahrten Abdichtmittels gepresst wurde, den bedeutenden Vorteil, dass das Entnehmen zwar einerseits automatisiert vonstatten geht, die Dichtmittelflasche andererseits jedoch keinem Überdruck ausgesetzt wird. Der Bedienungskomfort ist aufgrund der Automatisierung des Verfahrens ungleich höher als beim Einfüllen des Abdichtmittels per Hand in den Reifen. Zusätzlich jedoch können erstmals die bisher nur für das Handbefüllen verwendbaren Dichtmittelflaschen ebenso verwendet werden, indem diese mit einem entsprechenden Adapter ausgestattet werden. Es bestehen keine besonderen Anforderungen an die Flaschen oder Dichtmittelbehälter, da auf die Flaschen bzw. Behälter kein hoher Druck ausgeübt wird. Die Wandstärke der Dichtmittelflasche kann daher gering gehalten werden. Das Material des Dichtmittelbehälters muss auch keine besondere Festigkeit aufweisen und kann somit kostengünstig ausgewählt werden. Das erfindungsgemäße Verfahren ermöglicht daher die Verwendung kostengünstig herzustellender Dichtmittelflaschen bzw. - behälter und trägt somit zur Kosteneinsparung bei.

Da beim erfindungsgemäßen Verfahren Dichtmittelflaschen mit einer geringeren Wandstärke verwendet werden können, kann die Flasche insgesamt kleiner ausgelegt werden, da die Flaschenwand weniger Raum beim Umhüllen desselben Volumens einnimmt.

Beim erfindungsgemäßen Verfahren kann zudem ein Dichtmittelbehälter verwendet werden, dessen Form nicht mehr typisch flaschenartig ist und wegen des bei der bisherigen Nutzung herrschenden Überdrucks zur Vermeidung von Spannungsspitzen im Wandmaterial Rundungen aufweisen muss, was bezogen auf den Flascheninhalt relativ viel Stauraum benötigt, sondern er kann stauraumoptimiert sein und ggf. Ecken und Kanten aufweisen. Da das Abdichtmittel beim erfindungsgemäßen Verfahren nicht mehr von Druckluft unterstützt die Dichtmittelflasche unter Druck verlässt, sondern im wesentlichen aus der Flasche heraus gesaugt wird, spielen die Behältergeometrie und insbesondere Ecken oder gar Hinterschneidungen eine untergeordnete Rolle. Das erfindungsgemäße Verfahren kann somit vorteilhaft auch mit Dichtmittelbehältern ausgeführt werden, die eine beliebige Behältergeometrie aufweisen können, wie bspw. eine eckige Form oder dgl., was zu einer Anpassung des Behältervolumens an freie Resträume und damit zu einer Einsparung an Stauraum für den Dichtmittelbehälter und somit zu einer Kostensenkung führt.

Beim erfindungsgemäßen Verfahren können ferner weniger aufwändig gestaltete Verbindung bzw. Leitungen zwischen dem die Druckluft führenden Schlauch- bzw. Leitungssystem und dem Inneren des Dichtmittelbehälters verwendet werden. Bei diesen Verbindungen handelt es sich um eine optional vorhandene Unterdruck-Ausgleichs- bzw. Unterdruckentlastungsleitung zum Zuführen einer Teilmenge von unter Druck stehendem Gas in den Dichtmittelbehälter, sowie eine vorgesehene Entnahmeleitung, über die das Abdichtmittel aus dem Dichtmittelbehälter entnommen wird, um es dem zum Reifen führenden Schlauchsystem zuzuführen. Da beim erfindungsgemäßen Verfahren die Dichtmittelflasche bzw. der -behälter anders als beim Stand der Technik nicht mit hohem Druck beaufschlagt wird, müssen diese Leitungen ihrerseits keinem hohen Druck standhalten und können Kosten sparend und wenig aufwändig hergestellt werden.

Ein weiterer Vorteil des erfindungsgemäßen Verfahrens liegt darin, dass es mit Dichtmittelbehälter betrieben werden kann, die anders als herkömmliche Dichtmittelbehälter für automatisierte Verfahren keine Ventile benötigen, die ein Einlassen des unter Druck stehenden Gases in den Dichtmittelbehälter sowie ein Entnehmen des Abdichtmittels bei bestimmten Druckverhältnissen regeln. Da diese Ventile beim erfindungsgemäßen Verfahren nicht benötigt werden, kann der Dichtmittelbehälter kostengünstiger hergestellt werden. Von Vorteil ist zudem, dass durch den Wegfall der Ventile ein für Störungen potentiell anfälliges Bauteil weniger benötigt wird.

Da beim erfindungsgemäßen Verfahren das Reifenreparatursystem auf einem niedrigeren Druckniveau betrieben werden kann als herkömmliche automatisierte Systeme, ergibt sich folgender weiterer Vorteil: Da zum Entnehmen des Abdichtmittels kein hoher Druck vonnöten ist, und der Reifendruck nicht höher als rund 3 bar liegt, ist beim erfindungsgemäßen Verfahren anders als bei Systemen des Stands der Technik kein Kompressordruck von über 10 bar nötig. Für das Erzeugen der nötigen Drucksenkung im Inneren des Dichtmittelbehälters bzw. im Bereich seiner Auslassöffnung für das Abdichtmittel zum Ablassen des Abdichtmittels aus der auf dem Kopf stehenden Dichtmittelflasche genügt im Schlauchsystem, verglichen mit dem Stand der Technik, ein deutlich geringerer Druck. Dies aber ermöglicht es, den Kompressor und das Schlauchsystem für geringe Drücke auszulegen, was sich in geringeren Herstellungskosten und geringerem Bauraum vorteilhaft niederschlägt.

In einer bevorzugten Abwandlung des erfindungsgemäßen Verfahrens wird mittels eines an einer Venturi-Düse vorbeiströmenden Gases eine Druckverringerung im Dichtmittelbehälter erzeugt und zugleich durch wenigstens eine Druckausgleichsöffnung im Behälter dafür gesorgt, dass ein sich im Dichtmittelbehälter mit zunehmender Menge der bereits abgeflossenen Dichtmittelmenge aufbauender Unterdruck ausgeglichen wird. Auf diese Weise wird mit dem erfindungsgemäßen Verfahren vorteilhaft wirkungsvoll verhindert, dass sich im Dichtmittelbehälter ein Unterdruck aufbauen kann, der so groß ist, dass der von der Venturi-Düse erzeugte Sog nicht mehr ausreichen könnte, das Abdichtmittel aus dem Dichtmittelbehälter zu saugen.

In einer weiter bevorzugten Abwandlung des erfindungsgemäßen Verfahrens wird ein Teil des vom Kompressor zum Reifen strömenden Gases über wenigstens eine Öffnung des Dichtmittelbehälters dem Inneren des Dichtmittelbehälters zugeführt. Diese Gasmenge erhöht den Druck im Dichtmittelbehälter teilweise und hilft mittels dieser teilweisen Druckerhöhung vorteilhaft, das Abdichtmittel über die mit der Venturi-Düse versehene Öffnung abzusaugen. Von Vorteil ist ebenfalls, dass die dem Dichtmittelbehälter zugeführte Gasmenge einem sich bildenden, einem Auslassen des Abdichtmittels aus dem Dichtmittelbehälter entgegen gerichteten Unterdruck entgegenwirkt. So verhindert die zugeführte Gasmenge nicht nur, dass das Abdichtmittel aufgrund von Unterdruck nicht über die Venturi-Düse ablaufen kann, sondern sie verhindert in vorteilhafter Weise auch, dass der Dichtmittelbehälter aufgrund des sich andernfalls bildenden Unterdrucks in sich zusammenfallen oder implodieren kann und hierdurch seine Funktion verliert.

In einer weiter bevorzugten Abwandlung des erfindungsgemäßen Verfahrens wird der Dichtmittelbehälter durch Verschlussmittel vorteilhaft vor einem unbeabsichtigten Ausfließen von Abdichtmittel geschützt. Bei diesen Mitteln kann es sich bspw. um Wachssiegel handeln, die in der Öffnung des Dichtmittelbehälters mit der Venturi-Düse eingebracht werden können und bei Einsetzen des Gasstroms vom Kompressor von diesem automatisch aus ihrer Position herausgesaugt werden und die entsprechende Öffnung zum Abfließen des Abdichtmittels freigeben. Diese Öffnung kann aber auch durch andere Verschlussmittel vorteilhaft gesichert werden. So können vor dem Aufpumpen des Reifen zu entfernende oder durch eine erste Druckluftmenge zu zerstörende Folien verwendet werden. Auch Aufsätze, die ähnlich einer Wippe erst bei Beaufschlagung mit Pressluft aus einer Sicherungsstellung heraus in eine Entnahmestellung gebracht werden, können die Sicherung der Abflussöffnung des Dichtmittelbehälters gegen unbeabsichtigtes Ausfließen übernehmen.

Die beim erfindungsgemäßen Verfahren verwendeten Dichtmittelflaschen oder -behälter können zudem an ihrem Ende mit der Auslassöffnung für das Abdichtmittel einen in die Flasche bzw. den Behälter integrierten oder dem Behälter bzw. der Flasche zugeordneten Abschnitt aufweisen, welcher der Dichtmittelflasche bzw. dem -behälter bei der Reifenreparatur als Standfuß dienen kann. Dieser Standfuß hält die Dichtmittelflasche bzw. den Dichtmittelbehälter während der Reparatur in einer gewünschten Stellung, was im Falle der Dichtmittelflasche bspw. eine Stellung sein kann, in der die Flasche zu ihrem einfacheren Entleeren auf ihrem Kopf steht. Der diskutierte Fuß kann aber auch so in die Flasche bzw. den Behälter integriert sein, dass eine beliebige Stellung der Flasche bzw. des Behälters während der Reifenreparatur sichergestellt bleibt. Das Integrieren eines solchen Fußes zum Stützen der Dichtmittelflasche bzw. des -behälters erlaubt der beim erfindungsgemäßen Verfahren verwendeten Dichtmittelflasche bzw. -behälter - verglichen mit herkömmlichen Flaschen - die Nutzung von Raum, der bislang für die Verbindung von Flasche und Fuß benötigt wurde und als Totraum galt. Da auch diese Raumnutzung eine kleiner Gestaltung der Dichtmittelflasche bei selbem Inhalt erlaubt, trägt das erfindungsgemäße Verfahren zur Einsparung von Stauraum bei und erhöht damit den freien Bauraum und hilft damit schlussendlich Kosten zu senken.

Die beim erfindungsgemäßen Verfahren verwendeten Dichtmittelflaschen oder -behälter können zudem an einem Abschnitt an ihrem Ende mit der Auslassöffnung für das Abdichtmittel in die Flasche bzw. den Behälter integrierte Anschlüsse für die Schläuche vom Kompressor zur Dichtmittelflasche bzw. -behälter sowie von der Dichtmittelflasche bzw. - behälter zum Reifen und selbst die Venturi-Düse aufweisen. Auch dieses Integrieren der Anschlüsse bzw. der Venturi-Düse in die Dichtmittelflasche bzw. den -behälters erlaubt der beim erfindungsgemäßen Verfahren verwendeten Dichtmittelflasche bzw. -behälter die Nutzung von Raum, der bei herkömmlichen Flaschen für automatisierte Reparatursysteme für die Verbindung von Flasche und den die Anschlüsse und die Venturi-Düse aufweisenden Fuß benötigt wurde und Totraum darstellte. Da auch diese Raumnutzung eine kleinere Gestaltung der Dichtmittelflasche bei selbem Inhalt erlaubt, trägt das erfindungsgemäße Verfahren zur Einsparung von Stauraum bei und erhöht damit den freien Bauraum und hilft damit schlussendlich Kosten zu senken.

Im Rahmen des erfindungsgemäßen Verfahrens kann ein beliebiges Gas zum Aufpumpen des defekten Reifens verwendet werden. Jedoch darf das gewählte Gas zu keinerlei Schädigung des Tire-Repair-Kits, des Reifens oder der Umgebung führen. Zudem darf vom verwendeten Gas keine Gesundheitsschädigung ausgehen. Ferner darf das mit dem Gas bei und nach der Reparatur in Kontakt kommende bzw. stehende Abdichtmittel in seinen für seinen Einsatz beim Abdichten und Aufpumpen des defekten Reifens relevanten Eigenschaften nicht beeinträchtigt werden. Somit bieten sich beispielsweise Edelgase an, die zudem den Vorteil aufweisen, dass sie die Laufeigenschaften des Reifens, wie guten Federungskomfort und reduzierte Abrollgeräusche, verbessern. Aus Gründen einer ständigen und zugleich kostenlosen Verfügbarkeit bietet sich die Umgebungsluft besonders an.

Zur Lösung der Aufgabe bzw. zum Erreichen der erläuterten Vorteile und Ziele schlägt die Erfindung ferner eine Vorrichtung vor, mit welcher die oben genannten, erfindungsgemäßen Verfahren umgesetzt werden können.

Die Erfindung schlägt ferner einen Adapter vor, der vorteilhaft beim erfindungsgemäßen Verfahren angewandt werden kann.

Die Erfindung wird in nachfolgenden Ausführungsbeispielen anhand der Figuren der Zeichnung näher erläutert. Es zeigt:
- Fig. 1: eine schematisch vereinfachte Ansicht einer Dichtmittelflasche mit einem eine Venturi-Düse aufweisenden, an Schläuche anschließbaren Adapter, gemäß einer erfindungsgemäßen Ausführungsform;
- Fig. 2: eine schematische Draufsicht auf den Fuß mit einer erfindungsgemäßen Venturi-Düse aus Fig. 1.

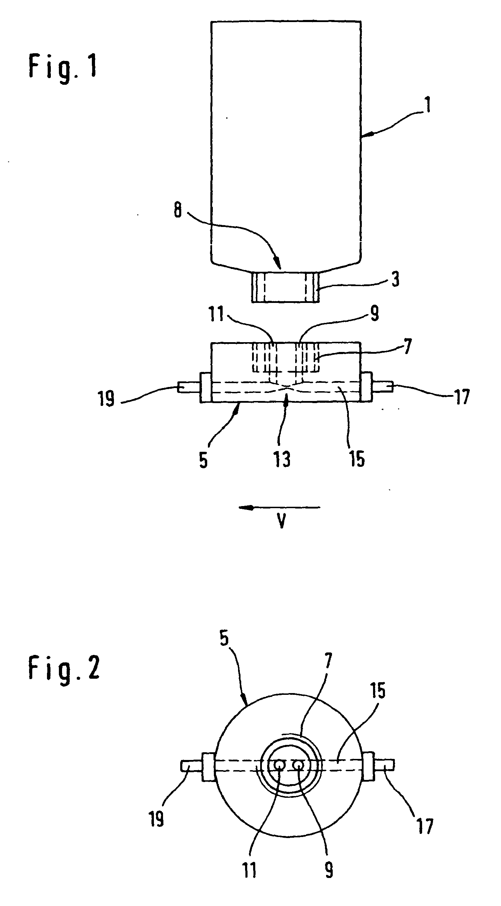

Fig. 1 zeigt eine herkömmliche Dichtmittelflasche (1), die am Flaschenhals ein Gewinde (3) aufweist und aus PE hergestellt sein kann. Mit dem Gewinde (3) kann die Dichtmittelflasche (1) im Bedarfsfall, so wie in Fig. 1 gezeigt, mit dem Kopf nach unten gerichtet mittels des in einem Fuß (5) vorgesehen Gegengewinde (7) am Fuß (5) befestigt werden, wobei andere Befestigungs- und Verbindungsarten möglich sind. Der Fuß (5) hält die Dichtmittelflasche (1) in ihrer aufrechten Position und sorgt für eine funktionsgerechte Verbindung zwischen der Dichtmittelflasche (1) und im Fuß (5) enthaltenen Leitungen für das Ablassen des in der Dichtmittelflasche (1) enthaltenen Abdichtmittels aus einer Auslassöffnung (8) der Dichtmittelflasche (1). Zu diesen Leitungen zählen in der vorliegenden Ausführungsform eine Unterdruckentlastungsleitung (9) sowie eine Venturi-Saugleitung (11). Der Fuß (5) weist ferner eine Venturi-Düse (13) auf, die in einer Leitung (15) im Fuß (5) zwischen zwei Anschlüssen (17, 19) des Fußes (5) angeordnet ist. Diese Leitung (15) ist mittels ihrer beiden Anschlüsse (17, 19) an das Schlauchsystem angeschlossen, das die Leitung (15) einerseits über den Anschluss (17) mit der Druckquelle verbindet und der Leitung (15) Gas bzw. Luft zuführt, andererseits vom Anschluss (19) zum Reifen führt und dem Reifeninneren ein Gas-Abdichtmittel-Gemisch zuführt. Die durch die Venturi-Düse (13) strömende Luft erzeugt eine in der Venturi-Saugleitung (11) wirkende Druckverringerung, die das sich in der Dichtmittelflasche (1) befindende Abdichtmittel aus der Dichtmittelflasche (1) heraus und in die Leitung (15) saugt.

Über die Unterdruckentlastungsleitung (9) wird dem Inneren des Dichtmittelbehälters (1) unter Druck stehendes Gas bzw. Luft zugeführt, welches im Dichtmittelbehälter (1) dazu beiträgt, einen beim Ablassen des Abdichtmittels entstehenden zu großen Unterdruck zu vermeiden und damit ein Zusammenfallen des Dichtmittelbehälters (1) oder ein Verhalten des Abdichtmittels im Dichtmittelbehälter (1) zu verhindern. Zudem erleichtert das zugeführte Gas aufgrund der vergleichsweise geringen Druckerhöhung (3-4 bar) im Inneren des Dichtmittelbehälter (1) das Entnehmen des Abdichtmittels über die Venturi-Saugleitung (11). Dieser sich aufbauende Ausgleichsdruck ist ebenfalls geeignet, ggf. vorhandene Versiegelungen (nicht gezeigt) der Leitungen (9, 11), die einem unbeabsichtigten Auslaufen des Abdichtmittels dienen sollen, beim ersten Einsetzen des Drucks zu brechen (Folie) bzw. aus den Rohren zu drücken (Wachssiegel). Auch ein Wipp-Verschluss oder ein Feder-Kugel-Verschluss gegen ein unbeabsichtigtes Auslaufen des Abdichtmittels können durch diesen Druck geöffnet werden.

Über das Venturi-Saugrohr (11) entweicht das Abdichtmittel aus dem Dichtmittelbehälter (1) und folgt aufgrund der mittels der Venturi-Düse (13) erzeugten Druckverringerung im Venturi-Saugrohr (11) dem Gasstrom in die Leitung (15). Von dort aus tritt das dem Gasstrom beigemischte Abdichtmittel in den sich an den Anschluss (19) anschließenden Teil des Schlauch ein und gelangt zusammen mit dem Gas in das Reifeninnere.

Fig. 2 zeigt die vereinfacht dargestellte Draufsicht auf den in Fig. 1 beschriebenen erfindungsgemäßen Fuß (5). Die Durchmesser der jeweils zentral eingezeichneten Unterdruckentlastungsleitung (9) und der Venturi-Saugleitung (11) sind in ihren Durchmessern so bestimmt, dass ein gewünschter Druck im Inneren des Dichtmittelbehälters (1) erzeugt bzw. aufrechterhalten wird, der einerseits zum Entnehmen des Abdichtmittels aus der Dichtmittelflasche (1) und zum Vermeiden eines ein Ausfließen des Abdichtmittels behindernden zu großen Unterdrucks in der Dichtmittelflasche (1) beiträgt, andererseits keinen unerwünscht hohen Druck auf die Dichtmittelflasche (1) ausübt.

Die vorgeschlagene Erfindung gibt somit erstmals ein Verfahren zum Abdichten und Aufpumpen von Reifen bei Pannen an, wobei ein in einem Dichtmittelbehälter enthaltenes Abdichtmittel durch ein Auslassventil aus dem Dichtmittelbehälter entnommen und mittels einem von einer Druckquelle erzeugten, unter Druck stehenden Gas aus dem Dichtmittelbehälter heraus zum Abdichten und Aufpumpen des Reifens in das Reifeninnere eingebracht wird. Mit dem von der Druckquelle kommenden, unter Druck stehenden Gas wird mittels einer Venturi-Düse im verbundenen Dichtmittelbehälter eine Druckverringerung erzeugt, und das Abdichtmittel wird mittels der Druckverringerung über die Venturi-Düse aus dem Dichtmittelbehälter entnommen und dem unter Druck stehenden Gas zugemischt. Das entstehende Abdichtmittel/Gas-Gemisch wird dem Reifeninneren zum Abdichten und Aufpumpen zugeführt. Die vorliegende Erfindung schlägt ferner erstmals eine Vorrichtung, mittels der das erfindungsgemäße Verfahren umgesetzt werden kann, sowie einen für das Umsetzen des Verfahrens geeigneten Dichtmittelbehälter als auch einen diesbezüglichen Adapter vor.

## Patentansprüche

1. Verfahren zum Abdichten und Aufpumpen von Reifen bei Pannen, wobei ein in einem Dichtmittelbehälter (1) enthaltenes Abdichtmittel durch eine Auslassöffnung (8) für das Abdichtmittel aus dem Dichtmittelbehälter (1) entnommen und mittels einem von einer Druckquelle mit Druck beaufschlagten Gas aus dem Dichtmittelbehälter (1) heraus in das Reifeninnere eingebracht wird, zum Abdichten und Aufpumpen des Reifens, **dadurch gekennzeichnet, dass** mit dem von der Druckquelle kommenden, unter Druck stehenden Gas mittels einer Venturi-Düse (13) eine Druckverringerung, vorzugsweise ein Unterdruck, an der Auslassöffnung (8) des Druckmittelbehälters (1) erzeugt wird, wobei mittels der Druckverringerung das Abdichtmittel über die Venturi-Düse (13) durch die Auslassöffnung (8) aus dem Dichtmittelbehälter (1) entnommen wird, und wobei dem unter Druck stehenden Gas das aus dem Dichtmittelbehälter (1) entnommene Abdichtmittel zugemischt wird und das entstehende Abdichtmittel/Gas-Gemisch dem Reifeninneren zugeführt wird.

2. Verfahren zum Abdichten und Aufpumpen von Reifen gemäß Anspruch 1, **dadurch gekennzeichnet, dass** mittels einer Druckausgleichsöffnung ein Druckausgleich im Dichtmittelbehälter (1) durchgeführt wird.

3. Verfahren zum Abdichten und Aufpumpen von Reifen gemäß Anspruch 2, **dadurch gekennzeichnet, dass** die Druckausgleichsöffnung des Dichtmittelbehälters (1) von einem Teil des Gases, welches vom Kompressor zum Reifen strömt, durchströmt wird und diese Gasteilmenge zum Entnehmen des Abdichtmittels aus dem Dichtmittelbehälter (1) dadurch beiträgt, dass diese den im Dichtmittelbehälter (1) herrschenden Druck erhöht, vorzugsweise einen im Dichtmittelbehälter (1) herrschenden Unterdruck ausgleicht.

4. Verfahren zum Abdichten und Aufpumpen von Reifen nach einem der Ansprüche 1 bis 4, **dadurch gekennzeichnet, dass** ein unbeabsichtigtes Ausfließen von Abdichtmittel aus dem Dichtmittelbehälter (1) durch Verschlussmittel wie bspw. Wachssiegel, Folien, Wippen oder Feder-Kugel-Dichtungen oder dgl. verhindert wird.

5. Vorrichtung zum Abdichten und Aufpumpen von Reifen bei Pannen mit einem ein Abdichtmittel enthaltenden Dichtmittelbehälter (1), der eine Auslassöffnung (8) für das Abdichtmittel aufweist, mit einer Druckquelle zum unter Druckstellen von Gas zum Einbringen des Abdichtmittels aus dem Dichtmittelbehälter (1) in das Reifeninnere und zum Aufpumpen des Reifens, **dadurch gekennzeichnet, dass** dem Dichtmittelbehälter (1) an der Auslassöffnung (8) eine Venturi-Düse (13) zugeordnet ist, so dass mit dem von der Druckquelle kommenden, unter Druck stehenden Gas im Dichtmittelbehälter (1) eine Druckverringerung, vorzugsweise ein Unterdruck, erzeugbar ist, mittels der das Abdichtmittel durch die Auslassöffnung (8) aus dem Dichtmittelbehälter (1) entnehmbar, dem unter Druck stehenden Gas beimischbar und dieses Abdichtmittel/Gas-Gemisch dem Reifeninneren zuführbar ist.

6. Vorrichtung zum Abdichten und Aufpumpen von Reifen nach Anspruch 5, **dadurch gekennzeichnet, dass** wenigstens eine Druckausgleichsöffnung im Dichtmittelbehälter (1) vorgesehen ist.

7. Vorrichtung zum Abdichten und Aufpumpen von Reifen nach Anspruch 6, **dadurch gekennzeichnet, dass** die Druckausgleichöffnung als in Strömungsrichtung der Venturi-Düse (13) und der Auslassöffnung (8) vorgeordneter Zugang vom Schlauchsystem zum Inneren des Dichtmittelbehälters (1) vorgesehen ist.

8. Vorrichtung zum Abdichten und Aufpumpen von Reifen nach einem der Ansprüche 5 bis 7, **dadurch gekennzeichnet, dass** die Auslassöffnung (8) des Dichtmittelbehälters Verschlussmittel gegen ein unbeabsichtigtes Ausfließen von Abdichtmittel aufweist, wie bspw. Wachssiegel, Folien, eine Wippe oder eine Feder-Kugel-Dichtung oder dgl.

9. Adapter für eine Vorrichtung zum Abdichten und Aufpumpen von Reifen mit Anschlüssen (17, 19) für Schlauchleitungen, einer zwischenliegenden Leitung (15) mit einer Venturi-Düse (13) und einem Anschluss für einen Dichtmittelbehälter (1), wobei in Strömungsrichtung vor der Venturi-Düse (13) eine Unterdruckentlastungsleitung (9) zwischen der Leitung und dem Anschluss und in Strömungsrichtung hinter der Venturi-Düse (13) eine Saugleitung (11) zwischen dem Anschluss und der Leitung (15) vorgesehen ist.

## Claims

1. A method for sealing and inflating tyres in the event of breakdowns, wherein a sealing means contained in a sealant container (1) is extracted from the sealant container (1) through a discharge opening (8) for the sealing means and transferred from the sealant container (1) into the interior of the tyre by means of a gas that is subjected to a pressure by a pressure source for the purposes of sealing and inflating the tyre, **characterized in that** a reduction in pressure, preferably a negative pressure, is produced at the discharge opening (8) of the sealant container (1) by means of a venturi tube (13) with the aid of the pressurised gas coming from the pressure source, wherein the sealing means is extracted from the sealant container (1) through the discharge opening (8) via the venturi tube (13) by means of the reduction in pressure, and wherein the sealing means extracted from the sealant container (1) is mixed with the pressurised gas and the resultant sealing means / gas mixture is supplied to the interior of the tyre.

2. A method for sealing and inflating tyres in accordance with Claim 1, **characterized in that** a pressure compensating process is effected in the sealant container (1) by means of a pressure balancing opening.

3. A method for sealing and inflating tyres in accordance with Claim 2, **characterized in that** a portion of the gas flowing from the compressor to the tyre flows through the pressure balancing opening of the sealant container (1) and the amount of this portion of the gas contributes to the extraction of the sealing means from the sealant container (1) **in that** it increases the pressure prevailing in the sealant container (1), preferably compensates for a negative pressure prevailing in the sealant container (1).

4. A method for sealing and inflating tyres in accordance with any of the Claims 1 to 4, **characterized in that** an unintentional outflow of the sealing means from the sealant container (1) is prevented by a closure means such as wax seals, foils, rockers or spring-ball seals or the like for example.

5. A device for sealing and inflating tyres in the event of breakdowns comprising a sealant container (1) which contains a sealing means and includes a discharge opening (8) for the sealing means, and also comprising a pressure source for putting a gas under pressure for the purposes of transferring the sealing means from the sealant container (1) into the interior of the tyre and for inflating the tyre, **characterized in that** a venturi tube (13) is associated with the sealant container (1) at the discharge opening (8) so that a reduction in pressure, preferably a negative pressure, is adapted to be produced in the sealant container (1) with the aid of the pressurised gas coming from the pressure source, and by means of the reduction in pressure the sealing means can be extracted from the sealant container (1) through the discharge opening (8) and mixed with the pressurised gas and this sealing means / gas mixture can be supplied to the interior of the tyre.

6. A device for sealing and inflating tyres in accordance with Claim 5, **characterized in that** at least one pressure balancing opening is provided in the sealant container (1).

7. A device for sealing and inflating tyres in accordance with Claim 6, **characterized in that** the pressure balancing opening is provided as an access means from the hose system to the interior of the sealant container (1) arranged upstream of the venturi tube (13) and the discharge opening (8) in the direction of flow.

8. A device for sealing and inflating tyres in accordance with any of the Claims 5 to 7, **characterized in that** the discharge opening (8) of the sealant container comprises closure means preventing unintentional outflows of the sealing means, such as wax seals, foils, a rocker or a spring-ball seal or the like for example.

9. An adapter for a device for sealing and inflating tyres including connectors (17, 19) for hose lines, an intermediary line (15) with a venturi tube (13) and a connector for a sealant container (1), wherein a negative pressure relief line (9) is provided between the line and the connector upstream of the venturi tube (13) in the direction of flow, and a suction line (11) is provided between the connector and the line (15) downstream of the venturi tube (13) in the direction of flow.

## Revendications

1. Procédé pour rendre étanche et regonfler des pneus en cas de pannes, sachant qu'un produit d'étanchéité, contenu dans un récipient à produit d'étanchéité (1) est prélevé du récipient à produit d'étanchéité (1) par une ouverture d'évacuation (8) pour le produit d'étanchéité et est introduit à l'intérieur du pneu, depuis le récipient à produit d'étanchéité (1), au moyen d'un gaz sollicité en pression par une source de pression, **caractérisé en ce que**, avec le gaz placé sous pression, venant de la source de pression, au moyen d'une buse Venturi (13), une diminution de pression, de préférence une pression négative, est produite à l'ouverture d'évacuation (8) du récipient à produit d'étanchéité (1), de sorte que, au moyen de la diminution de pression, le produit d'étanchéité soit prélevé du récipient à produit d'étanchéité (1) par l'ouverture d'évacuation (8) par l'intermédiaire de la buse Venturi (13), et le produit d'étanchéité, prélevé du récipient à produit d'étanchéité (1), est ajouté en mélange au gaz placé sous pression, et le mélange gaz/produit d'étanchéité créé est amené à l'intérieur du pneu.

2. Procédé pour rendre étanche et regonfler des pneus selon la revendication 1, **caractérisé en ce qu'**un équilibrage de pression est effectué dans le récipient à produit d'étanchéité (1), au moyen d'une ouverture d'équilibrage de pression.

3. Procédé pour rendre étanche et regonfler des pneus selon la revendication 2, **caractérisé en ce que** l'ouverture d'équilibrage de pression du récipient à produit d'étanchéité (1) est traversée par un écoulement d'une partie des gaz qui s'écoule du compresseur au pneu, et cette quantité de gaz partielle contribue au prélèvement du produit d'étanchéité hors du récipient à produit d'étanchéité (1), par le fait que celle-ci augmente la pression régnant dans le récipient à produit d'étanchéité (1), de préférence équilibre une pression négative régnant dans le récipient à produit d'étanchéité (1).

4. Procédé pour rendre étanche et regonfler des pneus selon l'une des revendications 1 à 4, **caractérisé en ce qu'**un échappement intempestif de produit d'étanchéité hors du récipient à produit d'étanchéité (1) est empêché à l'aide d'un moyen de fermeture tel que, par exemple, un sceau en cire, des feuilles, des bascules ou des joints d'étanchéité à bille et ressort ou analogue.

5. Dispositif pour rendre étanche et regonfler des pneus en cas de pannes, avec un récipient à produit d'étanchéité (1), contenant un produit d'étanchéité et présentant une ouverture d'évacuation (8) pour le produit d'étanchéité, avec une source de pression pour mettre sous pression de gaz, pour introduire à l'intérieur du pneu le produit d'étanchéité issu du récipient à produit d'étanchéité (1) et pour regonfler le pneu, **caractérisé en ce que** au récipient, à produit d'étanchéité (1), sur l'ouverture d'évacuation (8), est associée une buse Venturi (13), de sorte que, avec le gaz placé sous pression, venant de la source de pression, dans le récipient à produit d'étanchéité (1), peut être générée une diminution de pression, de préférence une pression négative, au moyen de laquelle le produit d'étanchéité peut être prélevé du récipient à produit d'étanchéité (1) par l'ouverture d'évacuation (8), peut être mélangé au gaz placé sous pression, et ce mélange gaz/produit d'étanchéité peut être amené à l'intérieur du pneu.

6. Dispositif pour rendre étanche et regonfler des pneus selon la revendication 5, **caractérisé en ce qu'**au moins une ouverture d'équilibrage de pression est prévue dans le récipient à produit d'étanchéité (1).

7. Dispositif pour rendre étanche et regonfler des pneus selon la revendication 6, **caractérisé en ce que** l'ouverture d'équilibrage de pression est prévue sous forme d'accès, disposé en amont de la buse Venturi (13) et de l'ouverture d'équilibrage (8), en observant dans la direction d'écoulement, du système à tuyau souple à l'intérieur du récipient à produit d'étanchéité (1).

8. Dispositif pour rendre étanche et regonfler des pneus selon l'une des revendications 5 à 7, **caractérisé en ce que** l'ouverture d'évacuation (8) du récipient à produit d'étanchéité présente des moyens de fermeture contre une sortie d'écoulement intempestive de produit d'étanchéité, tel que, par exemple, un sceau à la cire, des feuilles, une bascule ou un dispositif à bille et ressort ou analogue.

9. Adaptateur pour un dispositif pour rendre étanche et regonfler des pneus, avec des raccordements (17, 19) pour des conduites à tuyaux souples, une conduite (15) intermédiaire avec une buse Venturi (13) et un raccordement pour un récipient à produit d'étanchéité (1), sachant que, en amont de la buse Venturi (13, en observant dans la direction d'écoulement, est prévue une conduite de décharge à pression négative (9) entre la conduite et le raccordement et, en aval de la buse Venturi (13), en observant dans la direction d'écoulement, une conduite d'aspiration (11) entre le raccordement et la conduite (15).
